# EUROPEAN PATENT APPLICATION

(11) **EP 2 881 851 A1**
(43) Date of publication of application: **10.06.2015**
(21) Application number: 14185393.7
(22) Date of filing: 18.09.2014
(51) Int. Cl.: G06F 3/0488, G06F 17/24, G06F 3/041, G06F 3/0354

(54) **Paper medium, information input device, and information input program**

(30) Priority: 05.12.2013 JP 2013252558
(71) Applicant: Brother Kogyo Kabushiki Kaisha, Nagoya, Aichi 467-8561 (JP)
(72) Inventor: Ito, Chitoshi, Nagoya, Aichi 467-8562 (JP)
(74) Representative: Smith, Samuel Leonard

(57) **Abstract**

By writing a linear figure in a first command area 122 of a paper medium, a user is able to issue a command, to a reading device that can use the paper medium, to create a partial save file that describes at least a portion of information that has been written in an information writing area 121. By writing a linear figure in a second command area 123 of the paper medium, the user is able to issue a command, to the reading device that can use the paper medium, to create a page save file that describes all of the information that has been written in the information writing area 121.

## Description

### BACKGROUND

The present invention relates to a paper medium, an information input device, and an information input program that are suitable for converting into electronic data a path of a writing instrument that writes information on the paper medium.

A device is known that converts into electronic data the path of a writing instrument that writes information on a paper medium that has been placed on a base, the electronic data describing a linear figure of the information that has been written on the paper medium. For example, a handwriting input device that is disclosed in Japanese Laid-Open Patent Publication No. 2005-301860 acquires writing position data by receiving signals from a pen that is provided with a transmitter that transmits ultrasonic waves and infrared light. Furthermore, in a case where writing has been done in the position of a functional field on a form, the handwriting input device invokes the corresponding function.

### SUMMARY

In the known handwriting input device, when a user, after writing information on a page that is a surface of a one-page form, writes something in a Save field on the page, writing position data are stored that describe the information that was written. Furthermore, when the user writes additional information on the same page and again writes something in the Save field, writing position data are stored that describe the additional information that was written. In this case, when the user wants to acquire a file that describes all of the information that was written on the page, an operation must be performed that combines all of the writing position data that describe the information that was written on the page into a single writing position data set.

It is an object of the present invention to provide a paper medium, an information input device, and an information input program that are suitable for creating, in units that correspond to the user's needs, a file that describe written information.

A paper medium according to a first aspect of the present invention includes an information writing area, a first command area, and a second command area. The information writing area is provided on a surface of the paper medium. The information writing area is an area that allows a writing instrument to write one or more linear figures that express information. The first command area is provided on the surface of the paper medium in a different position from the information writing area. The first command area is an area that allows the writing instrument to write a linear figure for issuing a command to create a first linear figure file. The first linear figure file is a file that describes at least one of the one or more linear figures that are written in the information writing area. The second command area is provided on the surface of the paper medium in a different position from the information writing area and the first command area. The second command area is an area that allows the writing instrument to write a linear figure for issuing a command to create a second linear figure file. The second linear figure file is a file that describes all of the one or more linear figures that are written in the information writing area.

According to this, a user, by writing the linear figure in the first command area of the paper medium, is able to issue a command, to the information input device that is configured to use the paper medium, for example, to create a file that describes at least a part of the information that has been written in the information writing area. By writing the linear figure in the second command area of the paper medium, the user is able to issue a command, to the information input device that is configured to use the paper medium, for example, to create a file that describes all of the information that has been written in the information writing area. Therefore, the information input device may create, in units that correspond to the user's needs, a file that describes the information that has been written on the paper medium.

In the paper medium according to the present aspect, the paper medium may have a rectangular shape that extends vertically and horizontally. The second command area may be provided in a corner portion of the surface of the paper medium. In this case, because the second command area is located in a position where a linear figure is not likely to be written, the user may be inhibited from issuing a command to create a file by mistake.

In the paper medium according to the present aspect, the second command area may be provided in one of a lower right corner portion and lower left corner portion of the surface of the paper medium. The first command area may be provided adjacent to the second command area. In this case, after the user has finished writing information on the surface of the paper medium, it may be easy for the user to input a command to create a file. It may be also easy for the user to choose which one of the first linear figure file and the second linear figure file to create.

In the paper medium according to the present aspect, the information writing area may have a substantially rectangular shape that extends vertically and horizontally and whose edges follow edges of the surface of the paper medium. The first command area may have a narrow, substantially rectangular shape that extends vertically or horizontally along the information writing area. In this case, after the user has finished writing information on any one line, it may be easy for the user to input the command to create the first linear figure file.

In the paper medium according to the present aspect, each of the first command area and the second command area may be a check box. In this case, the user may be easily able to input the commands to create the files.

An information input device according to a second aspect of the present invention with which the paper medium. The information input device includes a placement means, a detection means, a data acquisition means, a writing determination means, a storage processing means, a first creation means, and a second creation means. The placement means is configured to allow the paper medium to be placed thereon. The detection means is configured to detect writing positions. The writing positions are positions of the writing instrument that writes one or more linear figures on the surface of the paper medium that is placed on the placement means. The data acquisition means is configured to acquire one or more linear figure data sets based on the writing positions that are detected by the detection means. Each of the one or more linear figure data sets describes a path of the writing instrument that writes corresponding one of the one or more linear figures. The writing determination means is configured to determining, based on the one or more linear figure data sets that are acquired by the data acquisition means, in which one of the information writing area, the first command area, and the second command area is written each one of the one or more linear figures. The storage processing means is configured to store, in a storage means, one or more linear figure data sets for each of which the writing determination means determines that the corresponding linear figure is written in the information writing area, from among the one or more linear figure data sets that are acquired by the data acquisition means. The first creation means is configured to create the first linear figure file based on the one or more linear figure data sets that are stored in the storage means, in a case where the writing determination means determines that one of the one or more linear figures is written in the first command area. The second creation means is configured to create the second linear figure file based on the one or more linear figure data sets that are stored in the storage means, in a case where the writing determination means determines that one of the one or more linear figures is written in the second command area.

According to this, the one or more linear figure data sets are acquired and stored based on the position where the writing instrument writes the one or more linear figures on the surface of the paper medium that is disposed on the placement means. In a case where the linear figure has been written in the first command area, a file that describes at least a part of the information that has been written in the information writing area is created based on the stored linear figure data sets. In a case where the linear figure has been written in the second command area, a file that describes all of the information that has been written in the information writing area is created based on the stored linear figure data sets. Therefore, the information input device may create, in units that correspond to the user's needs, a file that describes the information that has been written on the paper medium.

In the information input device according to the present aspect, the first creation means may be configured to create the first linear figure file based on one or more first specific linear figures. The one or more first specific linear figures are one or more linear figures that, among all of the one or more linear figures that are written in the information writing area, are written in the information writing area after all of one or more first previous linear figures. Each of the one or more first previous linear figures are described by one of the first linear figure file that was created in a preceding round of creating the first linear figure file and the second linear figure file that was created in a preceding round of creating the second linear figure file. The second creation means may be configured to create the second linear figure file based on one or more second specific linear figures. The one or more second specific linear figures are one or more linear figures that, among all of the one or more linear figures that are written in the information writing area, are written in the information writing area after all of one or more second previous linear figures. Each of the one or more second previous linear figures are described by the second linear figure file that was created in the preceding round of creating the second linear figure file. In this case, the information input device may create the files correctly, in units that correspond to the user's needs, based on the stored linear figure data sets.

An information input program according to a third aspect of the present invention includes instructions that cause a computer to perform steps. The computer is configured to access a storage means that stores one or more linear figure data sets. Each of the one or more linear figure data sets describes a path of the writing instrument that writes corresponding one of one or more linear figures on the surface of the paper medium. The steps includes: specifying one or more information linear figure data sets from among the one or more linear figure data sets that are stored in the storage means, each of the one or more information linear figure data sets describing one of the one or more linear figures that have been written in the information writing area; specifying a first command data set from among the one or more linear figure data sets that are stored in the storage means, the first command data set describing a linear figure that has been written in the first command area; specifying a second command data set from among the one or more linear figure data sets that are stored in the storage means, the second command data set describing a linear figure that has been written in the second command area; creating the first linear figure file based on the specified one or more information linear figure data sets, in a case where the first command data set is specified; and creating the second linear figure file based on the specified one or more information linear figure data sets, in a case where the second command data set is specified.

According to this, the one or more information linear figure data sets that describe the path of the writing instrument that writes the one or more linear figures on the surface of the paper medium are stored in the storage means. The one or more information linear figure data sets that describe the one or more linear figures that have been written in the information writing area are specified among the stored linear figure data sets. In a case where the first command data set is specified that describe the linear figure that has been written in the first command area, a file that describes at least a part of the information that has been written in the information writing area is created based on the specified information linear figure data sets. In a case where the second command data set is specified that describe the at least one linear figure that has been written in the second command area, a file that describes all of the information that has been written in the information writing area is created based on the specified information linear figure data sets. Therefore, the computer may create, in units that correspond to the user's needs, a file that describes the information that has been written on the paper medium.

In the information input program according to the present aspect, the creating of the first linear figure file may include creating the first linear figure file based on the one or more information linear figure data sets that are created within a first period. The first period is a period that starts from a first creation date and time and ends with a second creation date and time, The first creation date and time is a creation date and time for a first target command data set. The second creation date and time is a creation date and time for a second target command data set. The first target command data set is one of the first command data set and the second command data set. The second target command data set is one of the first command data set and the second command data set that is created first after the first creation date and time. The creating of the second linear figure file may include creating the second linear figure file based on the one or more information linear figure data sets that are created within a second period. The second period is a period that starts from a third creation date and time and ends with a fourth creation date and time. The third creation date and time is a creation date and time for a third target command data set. The fourth creation date and time is a creation date and time for a fourth target command data set. The third target command data set is the second command data set. The fourth target command data set is the second command data set that is created first after the third creation date and time. In this case, the computer may create the files correctly, in units that correspond to the user's needs, based on the stored linear figure data sets.

### BRIEF DESCRIPTION OF THE DRAWINGS

Embodiments will be described below in detail with reference to the accompanying drawings in which:
FIG. 1 is a figure that shows an overview of a handwriting input system 1;
FIG. 2 is a plan view of a reading device 2;
FIG. 3 is a block diagram that shows an electrical configuration of the reading device 2 and a PC 19;
FIG. 4 is a front view of a form 120;
FIG. 5 is a flowchart that shows main processing of the reading device 2;
FIG. 6 is a specific example of creating a linear figure file in the reading device 2;
FIG. 7 is a front view of a form 220; and
FIG. 8 is a flowchart of file creation processing.

### DETAILED DESCRIPTION

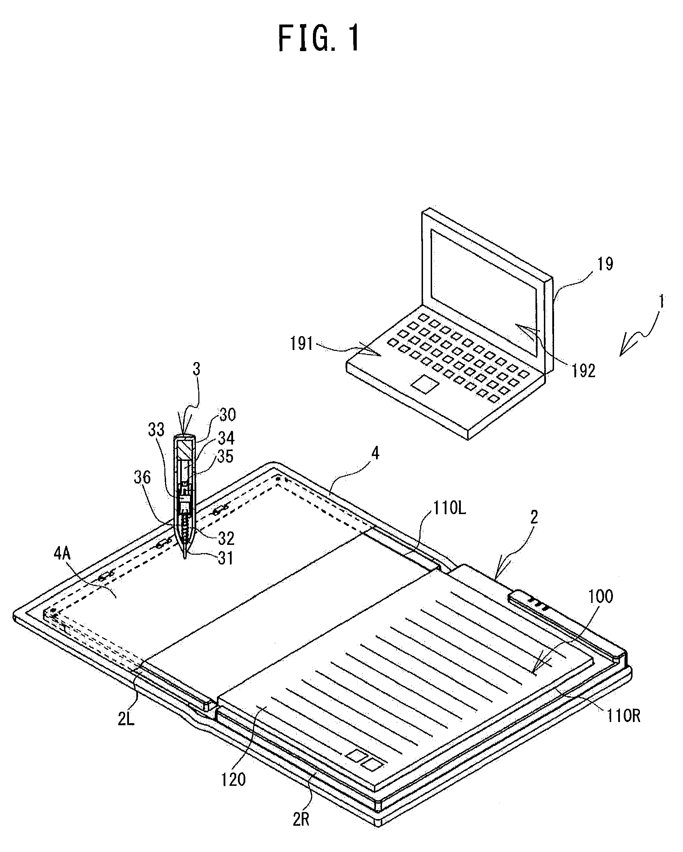

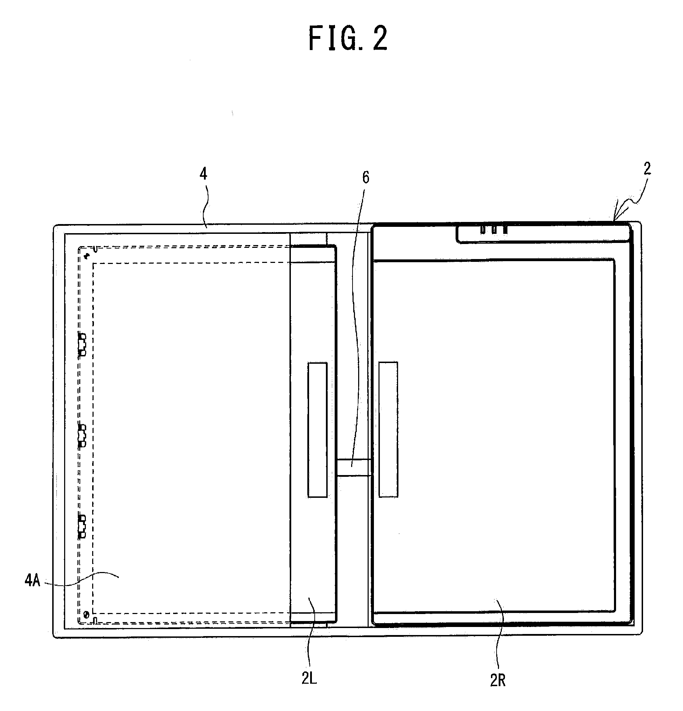

Hereinafter, an embodiment of the present invention will be explained with reference to the drawings. An overview of a handwriting input system 1 according to the present embodiment will be explained with reference to FIGS. 1 and 2. In the explanation that follows, for the sake of convenience, the upper left side, the lower right side, the top side, the bottom side, the upper right side, and the lower left side in FIG. 1 respectively correspond to the left side, the right side, the front side, the rear side, the top side, and the bottom side of a reading device 2 and a paper medium 100.

As shown in FIG. 1, the handwriting input system 1 includes the reading device 2, an electronic pen 3, a PC 19, and the like. The reading device 2 is a thin, lightweight handwriting input device that is configured to be folded up and carried. In the handwriting input system 1, a user uses the electronic pen 3 to write information in the form of at least one linear figure on a form 120 of the paper medium 100, which is affixed to the reading device 2. The information may include a text character, a numeric character, a symbol, a pictorial figure, and the like. The reading device 2 is configured to detect a position of the electronic pen 3. The reading device 2 is configured to specify the path of the electronic pen 3 based on a plurality of the positions of the electronic pen 3 that are detected over time.

As shown in FIG. 2, the reading device 2 includes a left-right pair of reading portions 2L, 2R, a flat cable 6, and a cover 4. The reading portions 2L, 2R are each shaped as a thin rectangular plate. The reading portions 2L, 2R are disposed on the front face of the cover 4, and they can form left and right facing pages. The reading portions 2L, 2R are electrically connected by the flat cable 6. The reading portion 2L is accommodated inside a pouch portion 4A that is provided in the left side of the cover 4. The reading portion 2R is affixed to the right front face of the cover 4 by double-sided tape, for example. The reading portions 2L, 2R is configured to allow the paper medium 100 to be placed thereon.

As shown in FIG. 1, the paper medium 100 is a booklet that is configured to be opened into left and right facing pages. The paper medium 100 includes a pair of covers 110L, 110R and a plurality of the forms 120. The covers 110L, 110R and the plurality of the forms 120 are bound along portions of their respective edges. The paper medium 100 can be mounted on and removed from the front face of the reading device 2. The paper medium 100 is mounted on the reading device 2 such that the cover 110L is placed on the top face of the reading portion 2L and the cover 110R is placed on the top face of the reading portion 2R. The covers 110L, 110R are respectively affixed to the reading portions 2L, 2R by double-sided tape, for example. The reading portions 2L, 2R can each move as a single unit with the covers 110L, 110R, respectively.

The user can use the electronic pen 3 to write information on the form 120 of the paper medium 100 that is mounted on the reading device 2. The electronic pen 3 may be a known electromagnetic induction type of electronic pen. The electronic pen 3 has a cylindrical body 30 that is substantially shaped like a circular cylinder. A portion of a core 31, a coil 32, a variable capacitance capacitor 33, a circuit board 34, a capacitor 35, and an ink storage portion 36 are contained in the interior of the cylindrical body 30.

The core 31 is provided in the tip portion of the electronic pen 3. The core 31 is energized toward the tip of the electronic pen 3 by an elastic member that is not shown in the drawings. The tip portion of the core 31 protrudes to the outside of the cylindrical body 30. The back end of the core 31 is connected to the ink storage portion 36, within which ink is stored. The ink storage portion 36 supplies the ink to the core 31. When the user uses the electronic pen 3 to write, a linear figure is formed by the ink on the form 120.

The coil 32 is held between the core 31 and the variable capacitance capacitor 33 in a state in which it is wound around the ink storage portion 36. The variable capacitance capacitor 33 is fixed in place in the interior of the electronic pen 3 by the circuit board 34. The capacitor 35 is mounted on the circuit board 34. The capacitor 35 and the variable capacitance capacitor 33 are connected in parallel with the coil 32 to configure a known resonance (synchronization) circuit.

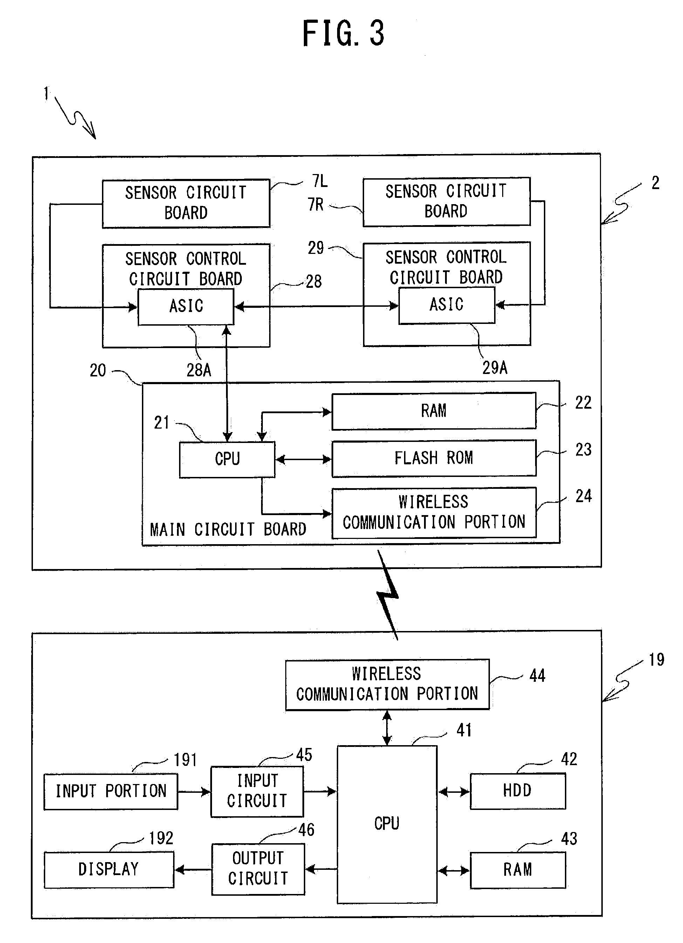

An electrical configuration of the handwriting input system 1 will be explained with reference to FIG. 3. The reading device 2 is provided with sensor circuit boards 7L, 7R, a main circuit board 20, and sensor control circuit boards 28, 29. The sensor circuit boards 7L, 7R are respectively provided inside the reading portions 2L, 2R. The main circuit board 20 is provided with a CPU 21, a RAM 22, a flash ROM 23, and a wireless communication portion 24.

The CPU 21 performs control of the reading device 2. The RAM 22 temporarily stores various types of data such as computation data and the like. The flash ROM 23 stores various types of programs that the CPU 21 executes to control the reading device 2. The flash ROM 23 also stores linear figure data that describe the path of the electronic pen 3. The wireless communication portion 24 is a controller for performing near field communication with an external electronic device.

In each one of the sensor circuit boards 7L, 7R, a plurality of long, thin loop coils are arrayed along both an X axis and a Y axis. The sensor circuit board 7L is electrically connected to an ASIC 28A of the sensor control circuit board 28. The sensor circuit board 7R is electrically connected to an ASIC 29A of the sensor control circuit board 29. The ASIC 28A is the master and is connected directly to the CPU 21, while the ASIC 29A is the slave and is connected to the CPU 21 through the ASIC 28A.

The principles by which the linear figure data are acquired will be explained in general terms. The CPU 21 controls the ASICs 28A, 29A such that they cause an electric current of a specific frequency (a sending current for excitation) to flow through each of the loop coils in the corresponding one of the sensor circuit boards 7L, 7R one at a time. This causes a magnetic field to be generated by each one of the loop coils in the sensor circuit boards 7L, 7R. In this state, the user uses the electronic pen 3 to write a linear figure on the form 120 of the paper medium 100 that is mounted on the reading device 2, for example. The electronic pen 3 comes close to the sensor circuit boards 7L, 7R. The resonance circuit of the electronic pen 3 resonates due to electromagnetic induction and generates an induced magnetic field.

Next, the CPU 21 controls the ASICs 28A, 29A such that they stop the generating of the magnetic fields in the sensor circuit boards 7L, 7R. Each one of the loop coils in the sensor circuit boards 7L, 7R receives the induced magnetic field that is generated by the resonance circuit of the electronic pen 3. The CPU 21 causes the ASICs 28A, 29A to detect signal currents (received currents) that flow through the individual loop coils in the sensor circuit boards 7L, 7R. The ASICs 28A, 29A perform this operation for all of the loop coils one at a time. Based on the received currents that are detected, the CPU 21 is configured to detect the positions of the electronic pen 3 in the form of coordinate data.

In a state in which a linear figure is being written on the form 120 using the electronic pen 3, a writing pressure is imparted to the core 31. The inductance in the coil 32 varies according to the writing pressure that is imparted to the core 31. This causes the resonance frequency of the resonance circuit of the electronic pen 3 to vary in accordance with the writing pressure that is imparted to the core 31. The CPU 21 detects the changes (phase changes) in the resonance frequency and specifies the writing pressure that is imparted to the core 31. Based on the specified writing pressure, the CPU 21 is configured to determine whether or not a state exists in which writing is being done. A state in which writing is being done is a state in which a linear figure is being written by the electronic pen 3 on the form 120.

A position specification table is stored in the flash ROM 23. The position specification table prescribes correspondences between the all of the coordinate points for the electronic pen 3 that can be detected by the reading device 2 and the coordinate points on the form 120 that is affixed to the reading device 2. By referencing the position specification table in the flash ROM 23, the CPU 21 is able to specify the position on the form 120 where the linear figure is written, based on the detected coordinate points for the electronic pen 3.

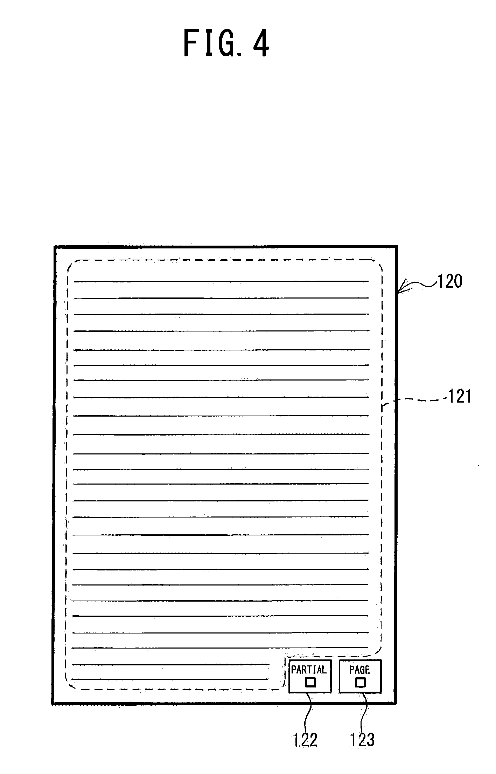

In the present embodiment, based on the detected coordinate points for the electronic pen 3, the CPU 21 is configured to determine whether or not a linear figure has been written in any one of an information writing area 121, a first command area 122, and a second command area 123 (refer to FIG. 4), which will be described later. In a case where a linear figure has been written in the information writing area 121, the CPU 21 acquires the linear figure data for each of linear figures and stores the linear figure data temporarily in the RAM 22. The linear figure data include information on a plurality of sets of coordinates that describe the path of the electronic pen 3 in one round of a writing operation, from the point where the electronic pen 3 makes contact with the form 120 until it separates from the form 120.

In a case where it determines that a linear figure has been written in one of the first command area 122 and the second command area 123, the CPU 21 creates a linear figure file based on the linear figure data that are temporarily stored in the RAM 22 and stores the file in the flash ROM 23. The linear figure file is an image file that describes one of all and at least one of the linear figures that have been written in the information writing area 121.

The PC 19 includes a CPU 41, a hard disk drive (HDD) 42, a RAM 43, a wireless communication portion 44, an input circuit 45, an output circuit 46, an input portion 191, and a display 192. The CPU 41 performs control of the PC 19. The HDD 42 stores various types of programs that the CPU 41 executes. The RAM 43 stores various types of data temporarily. The wireless communication portion 44 is a controller for performing near field communication with an external electronic device. The input circuit 45 performs control that sends commands to the CPU 41 from the input portion 191. The output circuit 46 performs control that displays an image on the display 192 in accordance with a command from the CPU 41.

In a case where a command has been input to the PC 19 to acquire the linear figure file in the reading device 2, the CPU 41 performs near field communication with the reading device 2 through the wireless communication portion 44. The linear figure file that has been stored in the flash ROM 23 of the reading device 2 is transmitted from the reading device 2 to the PC 19. The CPU 41 stores the linear figure file that has been transmitted from the reading device 2 in the RAM 43. The CPU 41 can display on the display 192 an image that is based on the linear figure file that is stored in the RAM 43. Furthermore, by performing known OCR processing on the image that is based on the linear figure file that is stored in the RAM 43, the CPU 41 is able to acquire the information that was written on the form 120.

The form 120 in the present embodiment will be explained with reference to FIG. 4. The form 120 has a rectangular shape that extends vertically and horizontally. The information writing area 121, the first command area 122, and the second command area 123 are provided on each of the front and rear surfaces (that is, the two surfaces) of the form 120. The information writing area 121, the first command area 122, and the second command area 123 are mutually independent areas on the surface of the form 120. The first command area 122 is provided adjacent to the second command area 123. The surface of the form 120 is equivalent to one page of the paper medium 100.

The information writing area 121 is an area that allows the electronic pen 3 to write one or more linear figures that express information. The information writing area 121 in the present embodiment is an open writing space that occupies the greater part of the form 120. The information writing area 121 has a substantially rectangular shape that extends vertically and horizontally, with its edges following the edges of the surface of the form 120. For example, in the information writing area 121, the user may freely write various types of information (text characters, symbols, pictorial figures, and the like) that he wants converted into electronic data and stored.

The first command area 122 is an area that allows the electronic pen 3 to write a linear figure for issuing a command to create a partial save file. The partial save file is a linear figure file that describes at least one of the one or more linear figures that have been written in the information writing area 121. The first command area 122 in the present embodiment is a check box that is provided in an end portion of the surface of the form 120, aligned with and to the left of the second command area 123. For example, in a case where the user wants the linear figures that have been written in the information writing area 121 to be stored in block units, the user writes a check mark in the first command area 122.

The second command area 123 is an area that allows the electronic pen 3 to write a linear figure for issuing a command to create a page save file. The page save file is a linear figure file that describes all of the one or more linear figures that have been written in the information writing area 121. The second command area 123 in the present embodiment is a check box that is provided in the lower right corner portion of the surface of the form 120. For example, in a case where the user wants the linear figures that have been written in the information writing area 121 to be stored in page units, the user writes a check mark in the second command area 123.

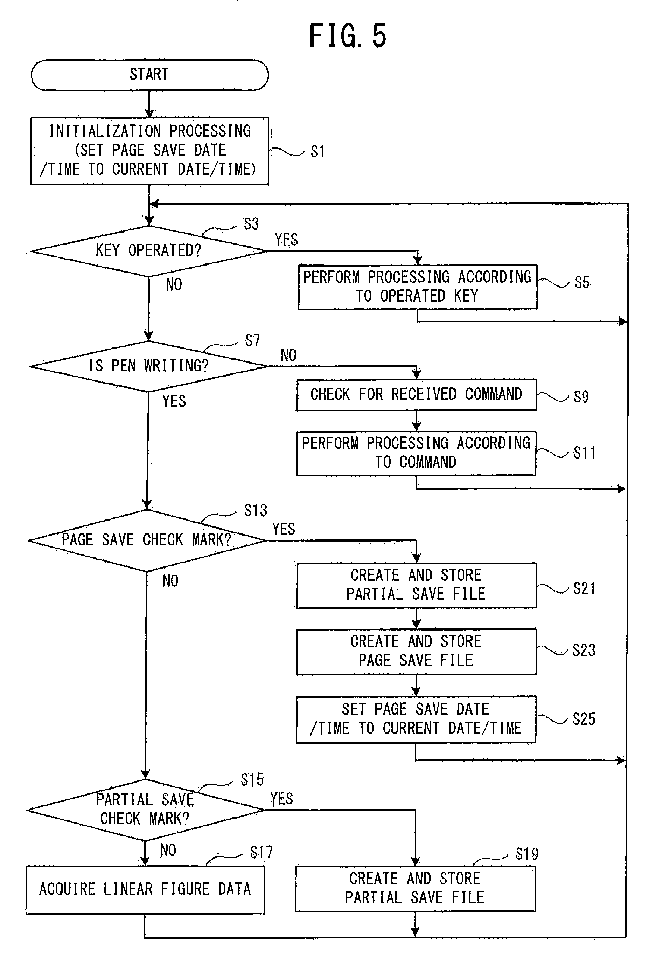

Main processing in the reading device 2 will be explained with reference to FIG. 5. When the power supply of the reading device 2 is turned on, the CPU 21 starts the main processing by executing a program that is stored in the flash ROM 23. First, initialization processing is performed for the reading device 2 (Step S1). The reading device 2 is controlled in an initialized state. At this time, the CPU 21 takes the current date and time, which are indicated by a timer that is not shown in the drawings, and sets them as a page save date and time in the RAM 22.

Next, a determination is made as to whether or not a key has been operated (Step S3). A plurality of physical keys (for example, a Power button, a Reset button, cursor keys, and the like) that the user can press are provided in the reading device 2, although they are not shown in the drawings. In a case where any one of the plurality of the physical keys has been pressed, the determination is made that a key has been operated (YES at Step S3). In that case, processing is performed in accordance with the key that was operated (Step S5), and the processing returns to Step S3.

In a case where a determination is made that no key has been operated (NO at Step S3), a determination is made as to whether or not the electronic pen 3 is writing (Step S7). In a case where the previously described state in which writing is being done is not being detected, the determination is made that the electronic pen 3 is not writing (NO at Step S7). In that case, a check is made to determine if a command has been received, based on a communication state of the wireless communication portion 24 (Step S9). For example, in a case where the user has used the PC 19 to perform a specific operation on the reading device 2, a command is transmitted from the PC 19 to the reading device 2 in accordance with the specific operation. In a case where a command has been received by the wireless communication portion 24, processing is performed in accordance with the received command (Step S11). The processing then returns to Step S3.

In a case where the state in which writing is being done is being detected, the determination is made that the electronic pen 3 is writing (YES at Step S7). In that case, a determination is made as to whether or not a page save check mark has been written (Step S 13). In a case where the position where the linear figure has been written is not the second command area 123, the determination is made that a page save check mark has not been written (NO at Step S13). In that case, a determination is made as to whether or not a partial save check mark has been written (Step S 15). In a case where the position where the linear figure has been written is not the first command area 122, the determination is made that a partial save check mark has not been written (NO at Step S 15). In that case, the position where the linear figure has been written is in the information writing area 121, so the linear figure data are acquired as described previously and are stored temporarily in the RAM 22. The processing then returns to Step S3.

In a case where the position where the linear figure has been written is the first command area 122, the determination is made that a partial save check mark has been written (YES at Step S 15). In that case, a partial save file is created and is stored in the flash ROM 23 (Step S19). For example, at Step S19, the partial save file is created by combining into a single file all of the linear figure data that have been stored temporarily in the RAM 22. The linear figure data that have been used for the creation of the partial save file are deleted from the RAM 22. The created partial save file is stored in the flash ROM 23 in association with a file creation date and time of the created partial save file. This file creation date and time are data that indicate the date and time when the partial save file was created. The processing then returns to Step S3.

In a case where the position where the linear figure has been written is the second command area 123, the determination is made that a page save check mark has been written (YES at Step S 13). In that case, a partial save file is created and is stored in the same manner as at Step S19 (Step S21). Next, a page save file that will be described later is created and is stored in the flash ROM 23 (Step S23). A page save date and time that have been set in the RAM 22 are updated to the current date and time, which are indicated by the timer that is not shown in the drawings (Step S25). The processing then returns to Step S3.

For example, at Step S23, from among all of the partial save files that have been stored in the flash ROM 23, the partial save files that were created after the page save date and time that have been set in the RAM 22 are acquired based on their individual file creation dates and times. The page save file is created by combining all of the acquired partial save files into a single file. The created page save file is stored in the flash ROM 23 in association with its file creation date and time of the created page save file. This file creation date and time are data that indicate the date and time when the page save file was created.

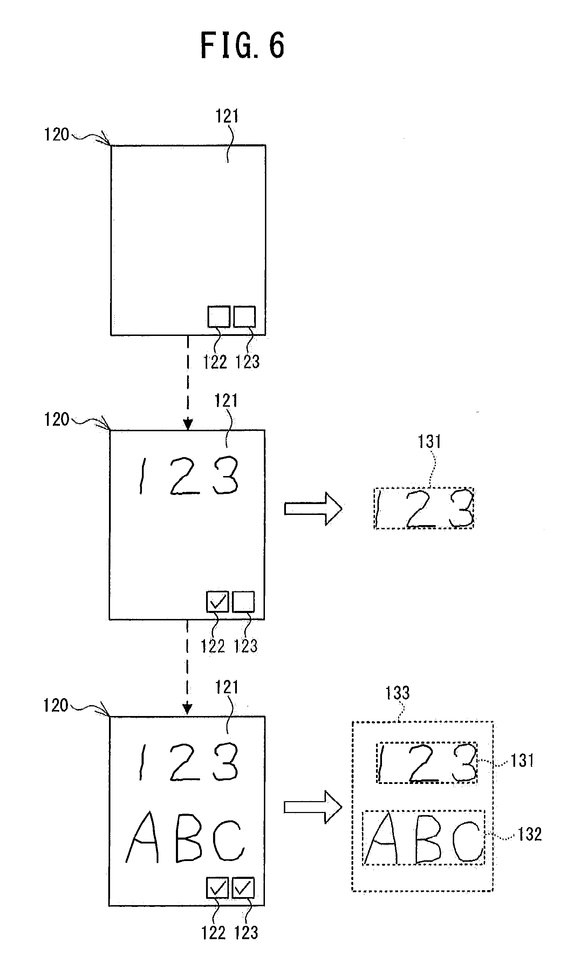

An example of the creating of a linear figure file by the reading device 2 will be explained in specific terms with reference to FIG. 6. In the example that is shown in FIG. 6, the paper medium 100 has been mounted on the front face of the reading device 2 in a state in which the power supply to the reading device 2 is on. Using the electronic pen 3, the user writes "123" in the information writing area 121. In the reading device 2, a plurality of linear figure data that describe the "123" are temporarily stored in the RAM 22 (YES at Step S7, NO at Step S13, NO at Step S 15, Step S17).

Then, using the electronic pen 3, the user writes a check mark in the first command area 122. In the reading device 2, a partial save file 131 that describes the "123" is created based on the linear figure data that have been temporarily stored in the RAM 22, and the partial save file 131 is stored in the flash ROM 23 (YES at Step S7, NO at Step S13, YES at Step S15, Step S 19). The partial save file 131 is an image file that describes the "123" within the smallest rectangular area within which the "123" can be accommodated.

Next, using the electronic pen 3, the user writes "ABC" in the information writing area 121. In the reading device 2, a plurality of linear figure data sets that describe the "ABC" are temporarily stored in the RAM 22 (YES at Step S7, NO at Step S13, NO at Step S15, Step S 17). Then, using the electronic pen 3, the user writes a check mark in the second command area 123. In the reading device 2, a partial save file 132 that describes the "ABC" is created based on the linear figure data that have been temporarily stored in the RAM 22, and the partial save file 132 is stored in the flash ROM 23 (YES at Step S7, YES at Step S13, Step S21). The partial save file 132 is an image file that describes the "ABC" within the smallest rectangular area within which the "ABC" can be accommodated.

Next, in the reading device 2, a page save file 133 that describes the "123" and the "ABC" is created based on the partial save files 131, 132 that have been stored in the flash ROM 23, and the page save file 133 is stored in the flash ROM 23 (Steps S23, S25). The page save file 133 is an image file that describes the "123" and the "ABC" within a rectangular area whose size corresponds to the form 120 (or the information writing area 121).

In a case where the user has performed a specific operation on the PC 19 to acquire the linear figure files in the reading device 2, a file acquisition command is transmitted from the PC 19 to the reading device 2. When the file acquisition command is received by the reading device 2, the linear figure files that are stored in the flash ROM 23 are transmitted from the reading device 2 to the PC 19 by near field communication (NO at Step S7, Step S9, Step S11). The user is thus able to view the partial save files 131, 132 and the page save file 133 on the PC 19.

As explained previously, according to the paper medium 100 of the present embodiment, the user, by writing a linear figure in the first command area 122, can issue a command to the reading device 2, which is configured to use the paper medium 100, to create a partial save file that describes at least a part of the information that has been written in the information writing area 121. By writing a linear figure in the second command area 123, the user can issue a command to the reading device 2, which is configured to use the paper medium 100, to create a page save file that describes all of the information that has been written in the information writing area 121. Therefore, the reading device 2 is configured to create, in units that correspond to the user's needs, a file that describes the information that has been written on the paper medium 100.

The paper medium 100 has a rectangular shape that extends vertically and horizontally. The second command area 123 is provided in a corner portion of the surface of the paper medium 100. In this case, because the second command area 123 is located in a position where a linear figure is not likely to be written, the user may be inhibited from issuing a command to create a page save file by mistake.

The second command area 123 is provided in the lower right corner portion of the surface of the paper medium 100. The first command area 122 is provided adjacent to the second command area 123. In this case, on a paper medium 100 on whose surface the lines for writing are arrayed from the top to the bottom, at the point when the user has finished writing linear figures on all of the lines, the electronic pen 3 is positioned close to the first command area 122 and the second command area 123. Therefore, after the user has finished writing information on the surface of the paper medium 100, it may be easy for the user to input a command to create a file. Moreover, the user may easily choose which one of the partial save file and the page save file to create.

The first command area 122 and the second command area 123 are check boxes. Therefore, the user may easily input the commands to create the files.

According to the reading device 2 of the present embodiment, one or more linear figure data sets are acquired and stored based on the positions of the electronic pen 3 that writes the linear figures on the surface of paper medium 100 that is disposed on the reading device 2 (Step S 17). In a case where a linear figure has been written in the first command area 122, the partial save file is created based on the one or more linear figure data sets that have been stored (Step S19). In a case where a linear figure has been written in the second command area 123, the page save file is created based on the one or more linear figure data sets that have been stored (Step S23). Therefore, the reading device 2 may create, in units that correspond to the user's needs, a file that describes the information that has been written on the paper medium 100.

The partial save file is created based on one or more first specific linear figures that have not been used for creating either a partial save file or a page save file (Step S 19). The one or more first specific linear figures are the linear figures, among all of the linear figures that have been written in the information writing area 121, that were written in the information writing area 121 after all of one or more first previous linear figures. Each of the one or more first previous linear figures is described by one of a preceding partial save file and a preceding page save file. The preceding partial save file was created in a preceding round of creating the partial save file. The preceding page save file was created in a preceding round of creating the page save file.

The page save file is created based on one or more second specific linear figures that were not used for creating the preceding page save file (Step S23). The one or more second specific linear figures are the linear figures, among all of the linear figures that have been written in the information writing area 121, that were written in the information writing area 121 after all of one or more second previous linear figures. Each of the one or more second previous linear figures is described by the preceding page save file. Therefore, based on the stored linear figure data, the reading device 2 may create a file correctly, in units that correspond to the user's needs.

In the embodiment that is described above, the electronic pen 3 is an example of a writing instrument of the present invention. The partial save file is an example of a first linear figure file of the present invention. The page save file is an example of a second linear figure file of the present invention. The reading device 2 is an example of an information input device of the present invention. The reading portions 2L, 2R are examples of placement means of the present invention. The sensor circuit boards 7L, 7R and the main circuit board 20 are examples of detection means of the present invention. The CPU 21 that is configured to perform Step S17 is an example of a data acquisition means and a storage processing means of the present invention. The CPU 21 that is configured to perform Steps S7, S 13, S 15 is an example of a writing determination means of the present invention. The RAM 22 is an example of a storage means of the present invention. The CPU 21 that is configured to perform Step S 19 is an example of a first creation means of the present invention. The CPU 21 that is configured to perform Step S23 is an example of a second creation means of the present invention.

The present invention is not limited to the embodiment that is described above, and various types of modifications can be made. The reading device 2 may detect the position of the electronic pen 3 by a different method. For example, the reading device 2 may be provided with a touch panel. It is preferable for the method of driving the touch panel to be a resistive touch method. The paper medium 100 may be placed on top of the touch panel. In a case where an operation of writing a linear figure in the form 120 of the paper medium 100 is performed by the electronic pen 3, the CPU 21 may detect through the touch panel the position at which the writing pressure is imparted.

The positions, the shapes, the sizes, and the like of the information writing area 121, the first command area 122, and the second command area 123 on the paper medium 100 are not limited to those in the embodiment that is described above. For example, the second command area 123 may be provided in the lower left corner portion of the surface of the paper medium 100. In that case, on a paper medium 100, on whose surface the lines for writing are arrayed from the right to the left, at the point when the user has finished writing linear figures on all of the lines, the electronic pen 3 is positioned close to the second command area 123. Therefore, after the user has finished writing information on the surface of the paper medium 100, it may be easy for the user to input the command to create the file.

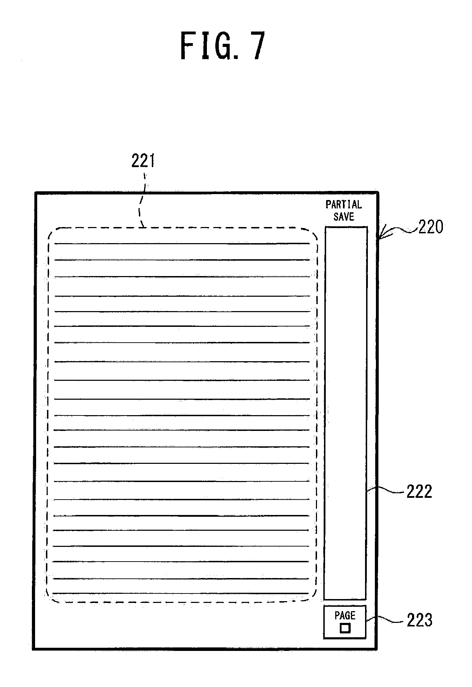

The paper medium 100 in a modified example includes a form 220, an example of which is shown in FIG. 7. In the form 220, an information writing area 221 has a rectangular shape that extends vertically and horizontally, following the edges of the surface of the form 220. A first command area 222 is provided to the right of the information writing area 221 and has a narrow, substantially rectangular shape whose long axis extends vertically along the information writing area 221. Note that a second command area 223 is provided in the lower right corner portion of the surface of the form 220, in the same manner as in the embodiment that is described above. Lines that extend from left to right are provided on the surface of form 220. At the point when the user has finished writing linear figures on any one line, the electronic pen 3 is positioned close to the first command area 222. Therefore, after the user has finished writing information on any one line, it may be easy for the user to input the command to create a partial save file.

Note that the first command area 222 may be provided below the information writing area 221 and may have a narrow, substantially rectangular shape whose long axis extends horizontally along the information writing area 221. In that case, it is preferable for the lines that are provided on the surface of form 220 to extend from top to bottom. Thus, at the point when the user has finished writing linear figures on any one line, the electronic pen 3 is positioned close to the first command area 222. Therefore, after the user has finished writing information on any one line, it may be easy for the user to input the command to create a partial save file.

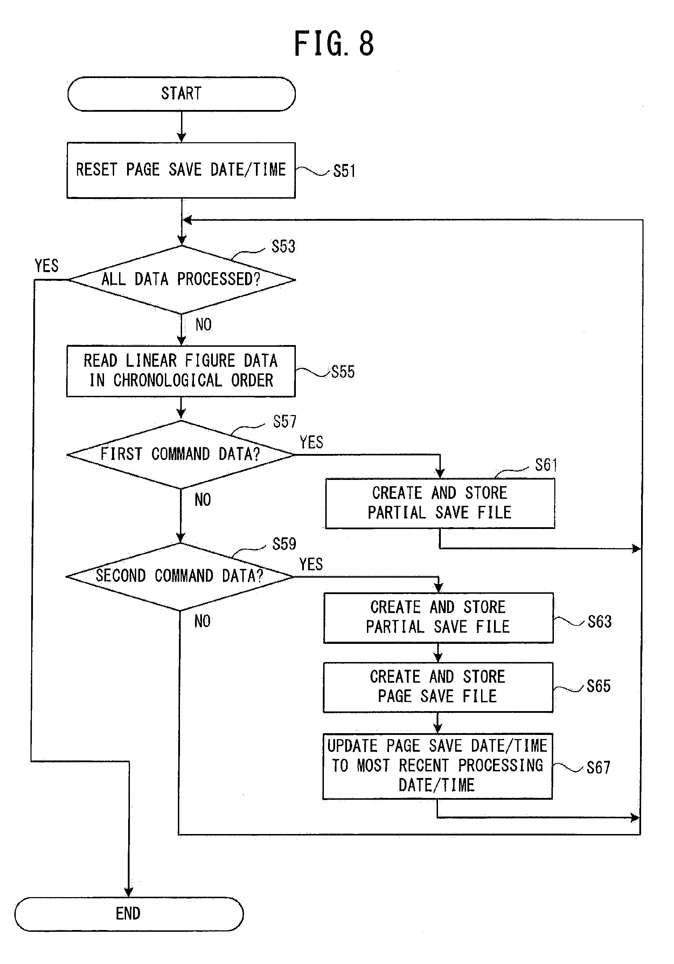

The creation of the linear figure files may be performed after the writing of the information on the paper medium 100 has been completed. For example, in the reading device 2 in the modified example, when a linear figure is written on the paper medium 100 using the electronic pen 3, the linear figure data that describe the path of the electronic pen 3 are stored in the flash ROM 23. After the writing of the information on the paper medium 100 has been completed, when the user inputs to the reading device 2 a command to create the linear figure files, the CPU 21 performs file creation processing that is shown in FIG. 8.

As shown in FIG. 8, in the file creation processing, first, the page save date and time that have been set in the RAM 22 are reset to their initial values (for example, the current date and time indicated by the timer) (Step S51). A determination is made as to whether or not all of the linear figure data that are stored in the flash ROM 23 have been processed (Step S53). In a case where unprocessed linear figure data remain in the flash ROM 23 (NO at Step S53), one set of the unprocessed linear figure data are read from the flash ROM 23 in chronological order (Step S55). The unprocessed linear figure data are the linear figure data that have not been read at Step S55. At Step S55, from among the unprocessed linear figure data that are stored in the flash ROM 23, a set of the linear figure data with the oldest creation date and time is read.

A determination is made as to whether or not target data are first command data (Step S57). The target data are the linear figure data that were most recently read at Step S55. The first command data describes a linear figure that has been written in the first command area 122. In a case where the target data are not the first command data (NO at Step S57), a determination is made as to whether or not the target data are second command data (Step S59). The second command data describe a linear figure that has been written in the second command area 123. In a case where the target data are not the second command data (NO at Step S59), the target data are information linear figure data. The information linear figure data describe a linear figure that has been written in the information writing area 121. The processing then returns to Step S53, and a next set of the linear figure data is read (Step S55).

In a case where the target data are the first command data (YES at Step S57), a partial save file is created and stored in the flash ROM 23 (Step S61). For example, at Step S61, a partial save file is created by combining into a single file the information linear figure data, among the linear figure data that have been stored in the flash ROM 23, for which the creation dates and times are older than the creation date and time for the target data. The linear figure data that have been used to create the partial save file are deleted from the flash ROM 23. In the flash ROM 23, the partial save file is stored in association with the file creation date and time of the partial save file. The processing then returns to Step S53.

In a case where the target data are the second command data (YES at Step S59), a partial save file is created and stored in the same manner as at Step S61 (Step S63). Next, a page save file is created and stored in the flash ROM 23 (Step S65). For example, at Step S65, from among all of the partial save files that have been stored in the flash ROM 23, the partial save files that were created after the page save date and time that has been set in the RAM 22 are acquired based on their individual file creation dates and times. The page save file is created by combining all of the acquired linear figure files into a single file. In the flash ROM 23, the page save file is stored in association with the file creation date and time of the page save file.

Next, the page save date and time that have been set in the RAM 22 are updated to the most recent processing date and time (Step S67). For example, the most recent processing date and time may be the creation date and time for the most recent page save file that is created at Step S65. The processing then returns to Step S53. In a case where no unprocessed linear figure data remain in the flash ROM 23 (YES at Step S53), the file creation processing (refer to FIG. 8) is terminated.

According to the modified example, one or more linear figure data sets that describe the path of the electronic pen 3 that writes the linear figures on the surface of the paper medium 100 are stored in the flash ROM 23. From among the stored linear figure data sets, one or more information linear figure data sets, which describe the linear figures that have been written in the information writing area 121, are specified. In a case where first command data set, which describe the linear figure that has been written in the first command area 122, are specified, a partial save file is created that describes at least a part of the information that has been written in the information writing area 121, based on the specified information linear figure data sets. In a case where second command data set, which describe the linear figure that has been written in the second command area 123, are specified, a page save file is created that describes all of the information that has been written in the information writing area 121, based on the specified information linear figure data sets. Therefore, the reading device 2 may create, in units that correspond to the user's needs, a file that describes the information that has been written on the paper medium 100.

The partial save file is created (Step S61) based on the one or more information linear figure data sets that were created within a first period. The first period is a period that starts from a first creation date and time and ends with a second creation date and time. The first creation date and time is a creation date and time for a first target command data set. The second creation date and time is a creation date and time for a second target command data set. The first target command data set is one of the first command data set and the second command data set. The second target command data set is one of the first command data set and the second command data set that is created first after the first creation date and time.

The page save file is created (Step S65) based on the one or more information linear figure data sets that were created within a second period. The second period is a period that starts from a third creation date and time and ends with a fourth creation date and time. The third creation date and time is a creation date and time for a third target command data set. The fourth creation date and time is a creation date and time for a fourth target command data set. The third target command data set is the second command data set. The fourth target command data set is the second command data set that is created first after the third creation date and time. Therefore, based on the one or more stored linear figure data sets, the reading device 2 may create the files correctly, in units that correspond to the user's needs.

The creation of the linear figure files may be performed by a device other than the reading device 2. For example, in the handwriting input system 1 of a modified example, all of the linear figure data that have been created in the reading device 2 may be transmitted to the PC 19 and stored in the HDD 42. In the PC 19, the CPU 41 may perform the file creation processing (refer to FIG. 8) in response to a command from the user. In this manner, linear figure files of the same sort as those described above (the partial save file and the page save file) may be created in the PC 19.

In the modified example that is described above, the one of the CPU 21 of the reading device 2 and the CPU 41 of the PC 19 that is configured to perform the file creation processing (refer to FIG. 8) is an example of a computer of the present invention. One of the flash ROM 23 and the HDD 42 is an example of a storage means of the present invention.

Note that in the embodiment and the modified examples, a microcomputer, an application-specific integrated circuit (ASIC), a field-programmable gate array (FPGA), or the like, for example, may be used instead of at least one of the CPU 21 and the CPU 41 as a processor that is configured to perform the processing according to the present invention.

## Claims

1. A paper medium (100) comprising:
an information writing area (121; 221) that is provided on a surface of the paper medium, the information writing area being an area that allows a writing instrument (3) to write one or more linear figures that express information;
a first command area (122; 222) that is provided on the surface of the paper medium in a different position from the information writing area, the first command area being an area that allows the writing instrument to write a linear figure for issuing a command to create a first linear figure file (131, 132), the first linear figure file being a file that describes at least one of the one or more linear figures that are written in the information writing area; and
a second command area (123; 223) that is provided on the surface of the paper medium in a different position from the information writing area and the first command area, the second command area being an area that allows the writing instrument to write a linear figure for issuing a command to create a second linear figure file (133), the second linear figure file being a file that describes all of the one or more linear figures that are written in the information writing area.

2. The paper medium according to claim 1, wherein:
the paper medium has a rectangular shape that extends vertically and horizontally, and
the second command area is provided in a corner portion of the surface of the paper medium.

3. The paper medium according to claim 2, wherein:
the second command area is provided in one of a lower right corner portion and lower left corner portion of the surface of the paper medium, and
the first command area is provided adjacent to the second command area.

4. The paper medium according to claim 2, wherein:
the information writing area has a substantially rectangular shape that extends vertically and horizontally and whose edges follow edges of the surface of the paper medium, and
the first command area has a narrow, substantially rectangular shape that extends vertically or horizontally along the information writing area.

5. The paper medium according to any one of claims 1 to 4, wherein:
each of the first command area and the second command area is a check box.

6. An information input device (2) with which the paper medium according to any one of claims 1 to 5 is usable, the information input device comprising:
a placement means (2L, 2R) that is configured to allow the paper medium to be placed thereon;
a detection means (7L, 7R, 20) for detecting writing positions, the writing positions being positions of the writing instrument that writes one or more linear figures on the surface of the paper medium that is placed on the placement means;
a data acquisition means (21) for acquiring one or more linear figure data sets based on the writing positions that are detected by the detection means, each of the one or more linear figure data sets describing a path of the writing instrument that writes corresponding one of the one or more linear figures;
a writing determination means (21) for determining, based on the one or more linear figure data sets that are acquired by the data acquisition means, in which one of the information writing area, the first command area, and the second command area is written each one of the one or more linear figures;
a storage processing means (21) for storing, in a storage means (22), one or more linear figure data sets for each of which the writing determination means determines that the corresponding linear figure is written in the information writing area, from among the one or more linear figure data sets that are acquired by the data acquisition means;
a first creation means (21) for creating the first linear figure file based on the one or more linear figure data sets that are stored in the storage means, in a case where the writing determination means determines that one of the one or more linear figures is written in the first command area; and
a second creation means (21) for creating the second linear figure file based on the one or more linear figure data sets that are stored in the storage means, in a case where the writing determination means determines that one of the one or more linear figures is written in the second command area.

7. The information input device according to claim 6, wherein:
the first creation means is configured to create the first linear figure file based on one or more first specific linear figures, the one or more first specific linear figures being one or more linear figures that, among all of the one or more linear figures that are written in the information writing area, are written in the information writing area after all of one or more first previous linear figures, each of the one or more first previous linear figures being described by one of the first linear figure file that was created in a preceding round of creating the first linear figure file and the second linear figure file that was created in a preceding round of creating the second linear figure file; and
the second creation means is configured to create the second linear figure file based on one or more second specific linear figures, the one or more second specific linear figures being one or more linear figures that, among all of the one or more linear figures that are written in the information writing area, are written in the information writing area after all of one or more second previous linear figures, each of the one or more second previous linear figures being described by the second linear figure file that was created in the preceding round of creating the second linear figure file.

8. An information input program that includes instructions that cause a computer (21; 41) that is configured to access a storage means (23; 42) that stores one or more linear figure data sets, each of the one or more linear figure data sets describing a path of the writing instrument that writes corresponding one of one or more linear figures on the surface of the paper medium according to any one of claims 1 to 5, to perform the steps of:
specifying one or more information linear figure data sets from among the one or more linear figure data sets that are stored in the storage means, each of the one or more information linear figure data sets describing one of the one or more linear figures that have been written in the information writing area;
specifying a first command data set from among the one or more linear figure data sets that are stored in the storage means, the first command data set describing a linear figure that has been written in the first command area;
specifying a second command data set from among the one or more linear figure data sets that are stored in the storage means, the second command data set describing a linear figure that has been written in the second command area;
creating the first linear figure file based on the specified one or more information linear figure data sets, in a case where the first command data set is specified; and
creating the second linear figure file based on the specified one or more information linear figure data sets, in a case where the second command data set is specified.

9. The information input program according to claim 8, wherein:
the creating of the first linear figure file includes creating the first linear figure file based on the one or more information linear figure data sets that are created within a first period, the first period being a period that starts from a first creation date and time and ends with a second creation date and time, the first creation date and time being a creation date and time for a first target command data set, the second creation date and time being a creation date and time for a second target command data set, the first target command data set being one of the first command data set and the second command data set, the second target command data set being one of the first command data set and the second command data set that is created first after the first creation date and time; and
the creating of the second linear figure file includes creating the second linear figure file based on the one or more information linear figure data sets that are created within a second period, the second period being a period that starts from a third creation date and time and ends with a fourth creation date and time, the third creation date and time being a creation date and time for a third target command data set, the fourth creation date and time being a creation date and time for a fourth target command data set, the third target command data set being the second command data set, the fourth target command data set being the second command data set that is created first after the third creation date and time.
